# EUROPÄISCHE PATENTSCHRIFT

(11) **EP 4 276 254 B1**
(45) Veröffentlichungstag und Bekanntmachung des Hinweises auf die Patenterteilung: **01.10.2025**
(21) Anmeldenummer: 23171384.3
(22) Anmeldetag: 03.05.2023
(51) Int. Cl.: E03C 1/05, E03C 1/04

(54) **EINHEBEL-KARTUSCHE ZUR SIGNALGENERIERUNG**
SINGLE LEVER CARTRIDGE FOR SIGNAL GENERATION
CARTOUCHE À LEVIER UNIQUE POUR LA GÉNÉRATION DE SIGNAUX

(30) Priorität: 09.05.2022 DE 102022111520
(43) Veröffentlichungstag der Anmeldung: 15.11.2023
(73) Patentinhaber: Aquis Systems AG, 9445 Rebstein (CH)
(72) Erfinder: Gröning, Ingolf, 97980 Bad Mergentheim (DE)
(74) Vertreter: Zimmermann & Partner Patentanwälte mbB

(56) Entgegenhaltungen:
- WO-A2-2009/019731
- US-A1- 2006 186 215
- US-A1- 2016 333 556

## Beschreibung

### Technisches Gebiet

Die Erfindung betrifft eine Kartusche, ein Wassersystem und ein Verfahren zum Steuern eines Wassersystems.

### Stand der Technik

Aus dem Stand der Technik sind hydraulische Einhebelmischer bekannt, die über eine begrenzte Rotationsbewegung das relative Verhältnis des warmen Wassers zu dem kalten Wasser vorgeben und über eine begrenzte Hebelbewegung die Durchflussmenge des Wassers vorgeben, wobei beide Funktionen in dem namensgebenden einen Hebel des Einhebelmischers so miteinander vereint sind, dass diese gleichzeitig bedient werden können. Die Bedienung hydraulischer Einhebelmischer verschiedener Hersteller ist in weiten Bereichen identisch, so dass ein hoher Gewöhnungsgrad an die Bedienbarkeit bei den Personen, die die hydraulischen Einhebelmischer bedienen, vorhanden ist.

Aus der EP 3 690 292 B1 sind intelligente Einhebelmischer bekannt, die zusätzlich die Temperatur des Wassers nach der Mischung erfassen und elektronisch an eine Steuerung weitergeben. Die WO 2009/019731 A2 beschreibt ein elektronisches Gerät zum Mischen von Wasser und zur Regulierung des Durchflusses. Die US 2016/333556 A1 zeigt einen elektronischen Wasserhahn mit einem Drehregler. Die US 2006/0186215 A1 zeigt einen elektronischen Wasserhahn mit einer knopfbasierten Einstellung.

Allerdings ist bei Einhebelmischern aus dem Stand der Technik das zu mischende Wasser zwingend durch den Einhebelmischer bzw. dessen Gehäuse zu führen. Eine grössere Flexibilität bezüglich der Anordnung des Hebels und der wasserführenden Elemente kann wünschenswert sein.

### Offenbarung der Erfindung

Aufgabe der Erfindung ist es, die Probleme aus dem Stand der Technik, zumindest teilweise, zu lösen. Insbesondere ist es Aufgabe der Erfindung, eine Vorrichtung anzugeben, welche bei einem Einhebelmischer eine grössere Flexibilität zur Anordnung der wasserführenden Leitungen bietet.

Die Aufgabe wird mit einer Einhebel-Kartusche nach dem Anspruch 1 und einem Verfahren nach dem nebengeordneten Verfahrensanspruch gelöst. Vorteilhafte Weiterbildungen und Ausführungsformen ergeben sich aus den Unteransprüchen und aus dieser Beschreibung.

Ein Aspekt der vorliegenden Offenbarung betrifft eine Kartusche zur Generierung von Steuersignalen für ein Wassermischsystem, umfassend: ein Gehäuse, eine relativ zu dem Gehäuse bewegliche Hebelbefestigung zur Aufnahme eines Hebels, und eine Gebereinrichtung zur Erzeugung eines Signals in Abhängigkeit der Position der Hebelbefestigung, wobei die Gebereinrichtung einen Positionsgeber und einen Wertgeber umfasst, wobei der Positionsgeber mit der Hebelbefestigung gekoppelt ist und wobei der Positionsgeber mit dem Wertgeber, welcher ortsfest bezüglich des Gehäuses montiert ist, zusammenwirkt.

Ein weiterer Aspekt der vorliegenden Offenbarung betrifft Verfahren zum Steuern eines Wassersystems, insbesondere eines Wassersystems in einer der hierin beschriebenen Ausführungsformen, umfassend: Ermitteln einer Stellung der Hebelbefestigung und Erzeugen eines der Stellung entsprechenden Signals durch den Wertgeber, Übermitteln des Signals an die Steuereinrichtung; und Ansteuern des zumindest eines Stellglieds durch die Steuereinrichtung in Abhängigkeit von dem Signal.

Ein Aspekt von Ausführungsformen kann ein Wassersystem zur Abgabe von Wasser betreffen, insbesondere ein konditionierbares Wassersystem, mit einer Kartusche in einer der hierin beschriebenen typischen Ausführungen, mindestens einem Stellglied zum Steuern der Bereitstellung von Wasser und einer Steuerungseinrichtung zum Kontrollieren des Stellglieds.

Typischerweise gibt das Signal der Gebereinrichtung eine zumindest zweidimensionale oder typischerweise dreidimensionale Position der Hebelbefestigung wieder. Bei typischen Ausführungsführungsformen wird die Position relativ zu einem Koordinatensystem der Kartusche ausgegeben. Mit dem Begriff Hebel wird typischerweise der Hebel bezeichnet, welcher aus einer Armatur hervorsteht, welche die Kartusche aufnimmt. Die Armatur kann die Form einer herkömmlichen Armatur haben und wasserführend sein. Bei weiteren Ausführungsformen ist die Kartusche in einer nicht-wasserführenden Armatur verbaut, beispielsweise in einer Armatur zur Bedienung einer Dusche, welche unter Putz bzw. unter Fliesen anderweitig mit Wasser versorgt wird.

Typischerweise wird der Wertgeber dazu verwendet oder ist dazu eingerichtet ein Signal zu erzeugen. Das Signal kann anzeigen, in welcher Position sich der Position relativ zu dem Wertgeber befindet.

Typische Positionsgeber umfassen einen Permanentmagneten, wobei der Wertgeber einen Hallsensor umfassen kann. Der Hallsensor kann der Sensor sein, der das Signal erzeugt. Auf diese Weise ist eine verschleissfreie Signalerzeugung ohne Schleifkontakte oder andere mechanische Kontakte wie beispielsweise Schalter möglich. Bei Ausführungsformen werden der Drehwinkel und der Kippwinkel des Gebermagneten, beispielsweise alpha, phi von einem kartesischen Koordinatensystem x, y, z aufgenommen mittels des Hallsensors aufgenommen. Soweit hierin "der Hallsensor" bezeichnet wird, ist damit typischerweise eine Anordnung mehrerer Einzel-Hallsensoren gemeint, beispielsweise von drei linearen Hallsensoren. Eine Transformation von dem x, y, z System in das alpha, phi System kann bei Ausführungsformen in dem Wertgeber oder in einer anderen Einrichtung im Datenstrom abwärts des Wertgebers, beispielsweise im Kommunikationsmodul oder in der Steuerungseinrichtung vorgenommen werden.

Typische Kartuschen weisen einen Wertgeber mit einem Potentiometer auf. Das Potentiometer kann passiv das Signal erzeugen, wobei das Signal typischerweise mindestens zwei über einzelne Leiter übertragene analogen Signalanteile alpha, phi umfasst. Alpha, phi geben dabei die Winkellagen der Hebelbefestigung relativ zur

Kartusche an, im Einzelnen einen Winkel um die Längsachse der Kartusche und einen Winkel quer zur Längsachse. Das alpha, phi System bildet damit zumindest im Wesentlichen die Bedienung an einem aus dem Stand der Technik bekannten Einhebelmischer ab. Ein Vorteil des Wertgebers mit Potentiometer kann sein, dass durch die passive Wirkungsweise keine Stromquelle am Wertgeber zwingend nötig ist. Typische Potentiometer können in zweifacher Richtung ausgeführt sein oder eine Vorder- und eine Rückseite mit Leiterbahnen aufweisen, auf welchen ein Schleifkontakt geführt ist.

Bei typischen Ausführungsformen von Potentiometern kann eine ringförmige Widerstandsbahn des Potentiometers zumindest einmal unterbrochen sein, so dass der Positionsgeber in Abhängigkeit von der polaren Stellung der Hebelbefestigung eine erste oder eine zweite Widerstandsbahn mit dem Kontaktring verbindet. Auf diese Weise lassen sich mehrere Felder generieren, insbesondere um verschiedene Funktionen, wie beispielsweise Wassertemperatur oder Sprudelgrad, abzubilden oder anzusteuern. Die unterbrochenen Widerstandsbahnen können durch Einzelwiderstände verbunden. Weiterhin können mit unterbrochenen Widerstandsbahnen differierende Wertebereiche, beispielsweise für verschiedene Funktionen generiert werden.

Bei Ausführungsformen von Kartuschen können mechanische Rastpunkte oder mechanische Widerstandspunkte zwischen verschiedenen Feldern vorgesehen sein. Dies ist sowohl bei Wertgebern mit Potentiometer als auch bei Wertgebern mit Hallsensor möglich. Auf diese Weise kann einem Bediener haptisch rückgemeldet werden, wenn er mit einem an der Hebelbefestigung befestigten Hebel von einem Feld in ein anderes Feld übertritt.

Typische Kartuschen umfassen ein Kommunikationsmodul, welches beispielsweise mit dem Wertgeber über eine Kabelverbindung oder drahtlos verbunden ist zur Übertragung des Signals des Wertgebers an das Kommunikationsmodul, Bei weiteren Ausführungsformen ist das Kommunikationsmodul mit dem Wertgeber integriert aufgebaut. Typische Kartuschen umfassen eine Energieversorgungseinrichtung. Die Energieversorgungseinrichtung kann beispielsweise einen Netzanschluss, eine Batterieaufnahme, einen Energiespeicher oder ein Energie-Harvesting-Modul aufweisen, welches beispielsweise aus einem Temperaturunterschied zum Heisswasser Energie bezieht. Wie bei "oder"-Aufzählungen üblich, können auch mehrere oder alle der genannten Alternativen vorgesehen sein, so weit nicht explizit ausgeschlossen. Energiespeicher, Energie-Harvesting-Modul oder Netzanschluss mit bspw. Schaltnetzteil können mit dem Wertgeber integral ausgeführt sein, beispielsweise um eine kompakte Bauweise zu erreichen.

Erfindungsgemäße Wassersysteme, welche zur Abgabe von Wasser eingerichtet sind, insbesondere zur Abgabe von konditioniertem Wasser umfassen eine Kartusche, mindestens ein Stellglied zum Steuern der Bereitstellung von Wasser und eine Steuerungseinrichtung zum Kontrollieren des Stellglieds. Typischerweise ist das Kommunikationsmodul dazu eingerichtet, ein von dem Wertgeber empfangenes Signal an die Steuerungseinrichtung zu übermitteln. Die Übermittlung kann drahtlos, beispielsweise über Bluetooth oder WLAN, kabelgebunden, oder optisch erfolgen.

Typischerweise ist die Steuerungseinrichtung dazu eingerichtet, in Abhängigkeit von dem Signal des Wertgebers Steuerdaten betreffend eine Temperatur, einen Volumenstrom oder einen Sprudelgrad eines abzugebenden Wassers oder eine Gesamtmenge eines in einem Abgabevorgang abzugebenden Wassers zu erzeugen. Die Steuerungseinrichtung ist bei typischen Ausführungsformen dazu eingerichtet, Stellglieder derart anzusteuern, dass aus dem Wassersystem Wasser entsprechend der Steuerdaten abgegeben wird.

Bei typischen Wassersystem kann die Steuerungseinrichtung integral mit der Kartusche ausgeführt sein, beispielsweise auch integral mit dem Wertgeber oder dem Kommunikationsmodul. Dies bietet den Vorteil eines kompakten Aufbaus der Gesamtanlage. Von der Steuerungseinrichtung mit der Kartusche müssen dann nur die Steuerdaten oder Befehle an die Stellglieder übertragen werden, wobei optional weitere Verbindungen beispielsweise zu einem Server oder einer Cloud vorgesehen sein können. Bei bevorzugten Ausführungsformen ist die Steuerungseinrichtung entfernt von der Kartusche angeordnet, insbesondere in einem von dem Gehäuse der Kartusche getrennten Gehäuse oder mindestens 10 cm oder mindestens 20 cm entfernt von der Kartusche. Dies bietet den Vorteil, dass die Steuerungseinrichtung an einem gut zugänglichen oder an einem Ort, welcher ausreichend Platz oder Energieversorgung bietet, angeordnet sein kann. Typische Steuerungseinrichtungen können dazu eingerichtet sein kann, mit mehr als einer Kartusche kommunikativ verbunden zu werden. Auf diese Weise lässt sich die Konditionierung von Wasser von verschiedenen Stellen aus durch einen Benutzer vorgeben. Oder es ist auch möglich, verschiedene Kartuschen durch Programmierung verschiedenen Stellgliedern, Wasserabgabestellen oder Einrichtungen zur Konditionierung von Wasser zuzuordnen.

Bei typischen Wassersystemen ist die Steuerungseinrichtung programmierbar ausgeführt, so dass die Steuerungseinrichtung dazu eingerichtet ist, die Steuerdaten auch in Abhängigkeit einer Programmierung der Steuerungseinrichtung zu erzeugen. So kann die Steuerungseinrichtung beispielsweise eingerichtet sein, um durch Programmierung Signale verschiedener Sensoren oder Wertgeber zu verarbeiten. Zu einer Verarbeitung kann eine Koordinatentransformation, beispielsweise von dem x, y, z System in das alpha, phi System gehören. Auf diese Weise können die Signale eines Hallsensors verwendet werden, um in eine Hebelstellung umgerechnet zu werden. Bei weiteren Ausführungsformen ist der Wertgeber dazu eingerichtet, die Signale des Hallsensors (x, y, z) in ein anderes Koordinatensystem umzurechnen, so dass die Signale vor der Weiterleitung beispielsweise über die Kommunikationseinrichtung bereits als umgerechnete Signale vorliegen. Bei einer Weiterleitung der Signale, unabhängig davon, in welchem Koordinatensystem diese übermittelt werden, können durch Anpassung der Steuerungseinrichtung, bspw. durch Programmierung, mit einer Kartusche verschiedene Geräte oder Stellglieder bedient werden. Bei einer Integration der Steuerungseinrichtung mit der Kartusche kann die Kartusche durch die Steuerungseinrichtung dazu eingerichtet sein, direkt Steuerdaten zu erzeugen oder bei weiteren Ausführungsformen sogar eingerichtet sind, um Stellglieder direkt ansteuern. Dies bietet den Vorteil eines kompakten Aufbaus oder einer Stand-alone-Lösung insbesondere für kleinere Anwendungen, wobei jedoch durch Einbau jeweils einer Steuerungseinrichtung in jede Kartusche bei komplexeren Systemen höhere Kosten entstehen können.

Eine Möglichkeit einer Programmierung der Steuerungseinrichtung von Ausführungsformen ist, dass die Steuerungseinrichtung aus den Signalen Steuerdaten in Abhängigkeit der Programmierung erzeugt. Beispielsweise kann eine Programmierung eine maximale Temperatur für das Wasser, einen maximalen Sprudelgrad oder einen maximalen Volumenstrom bzw. eine Durchflussmenge - auch in Abhängigkeit einer Temperatur oder eines Sprudelgrades des Wassers, umfassen. Zwischen der Steuereinrichtung und dem Kommunikationsmodul der Kartusche kann die Kommunikation über einen Kommunikationsbus erfolgen.

Eine Programmierung der Steuereinrichtung kann die Belegung vorbestimmter oder programmierbarer Felder des beispielsweise als Hallsensors ausgeführten Wertgebers mit verschiedenen Funktionen sein, beispielsweise eine Belegung eines Feldes mit einer Temperatureingabe und eines anderen Feldes mit einer Sprudelgradeingabe.

Eine Programmierung der Steuereinrichtung kann eine Anpassung der Erzeugung von Steuerdaten aus dem erhaltenen Signal des Wertgebers in Abhängigkeit eines angeschlossenen Gerätes sein. Beispielsweise für eine vom angesteuerten Gerät oder Stellglied abhängigen Steuerdaten, die aus dem erhaltenen Signal des Wertgebers erzeugt werden können sein:
Bei Einsatz eines Filters beispielsweise für Teewasser kann ungefiltertes Wasser zwischen Kalt und Warm mit einer Drehung der Hebelbefestigung bzw. des Hebels in einem Winkelbereich von mehr als 0°, beispielsweise zwischen 0° - 90°, um die Längsachse der Kartusche eingestellt werden. Dies entspricht einer herkömmlichen Bedienung, wie sie von manchen Einhebelmischern bekannt ist. Bei einer Drehung der Hebelbefestigung unter 0°, beispielsweise zwischen -90° und 0°, werden Steuerdaten zur Zuschaltung des Filters ausgegeben, so dass gefiltertes Wasser abgegeben wird, ggf. auch mit einer Temperatur entsprechend des Winkels. Die Temperatur wird dabei über Stellglieder eingestellt, welche das Mischungsverhältnis von Kalt- und Warmwasser beeinflussen. Das gemischte Wasser kann dann bei Anwahl eines Winkelbereichs von kleiner 0° durch den Filter geleitet werden - wiederum mittels Steuerdaten, die ein Stellglied zum Zuschalten des Filters bewirken.

Bei Einsatz eines Boilers beispielsweise zur Abgabe von warmen, kalten oder kochendem Wasser kann wiederum bis 90°, beispielsweise zwischen 0° - 90°, ein Bereich für Kalt-Warm-Verstellung vorgesehen sein - analog zu dem Anwendungsfall Filter. Steuerdaten zur Abgabe von kochendem Wasser mittels eines Stellglieds, welches eine Abgabe aus dem Boiler kontrolliert, können bei einer Stellung der Hebelbefestigung von mehr als 90°, beispielsweise bis 135°, ausgegeben werden. Vorzugsweise kann bei Kartuschen ein mechanischer Widerstand eine unbeabsichtigte Drehung über 90° begrenzen.

Bei Einsatz eines Kühlaggregats kann gekühltes Wasser beispielsweise bei einem Winkel von weniger als 0°, beispielsweise bei 0 - -90°, abgegeben werden, alternativ oder je nach Winkelstellung der Hebelbefestigung in Kombination mit gefiltertem Wasser. Bei einer Kombination mit einem Filter können beispielsweise von der Steuereinheit Steuerdaten für gefiltertes Wasser bei einer Winkelstellung der Hebelbefestigung von 0° bis -45° und Steuerdaten für gekühltes Wasser bei einer Winkelstellung der Hebelbefestigung von -45° bis -90° für die entsprechenden Stellglieder bereit gestellt werden.

Bei Einsatz eines Karbonisierers oder Sprudelgerätes kann mit CO₂ versetztes Wasser beispielsweise bei einer Winkellage der Hebelbefestigung um die Längsachse der Kartusche von weniger als 0° abgegeben werden, indem die Steuereinrichtung bei einem Signal entsprechend einer Winkellage von weniger als 0° entsprechende Steuerdaten zum Ansteuern eines Stellglieds, in diesem Fall beispielsweise eines Ventils in einer CO₂-Zuführung, ausgibt. Weiterhin kann bei Ausführungsformen auch eine Kombination verschiedener Bereiche beispielsweise für gefiltertes Wasser, gekühltes Wasser oder karbonisiertes, d.h. mit CO₂ versetztes Wasser, vorgesehen sein. Die Bereiche für die Hebelbefestigung zum Ansteuern der genannten Funktionalitäten sind typischerweise jeweils durch Programmierung der Steuereinrichtung vorgegeben. So kann vorgesehen sein, dass ab 0° in 30°-Schritten die Bereiche für die Zuschaltung jeweils des Stellglieds für den Filter, das Kühlaggregat und die CO₂-Zuführung aufeinanderfolgen, 0° bis -30°, 30° bis -60 und -60° bis -90°, wobei die Reihenfolge bei weiteren Ausführungsformen auch anders ausgeführt sein kann, insbesondere frei durch einen Benutzer programmierbar sein kann.

Typische Kartuschen weisen bei Bereichsgrenzen, beispielsweise 0°, -30° und -60° oder -45° für die Winkellage der Hebelbefestigung um die Längsachse der Kartusche typischerweise mechanische Widerstände auf.

Bei Ausführungsformen weist die Steuerungseinrichtung, insbesondere ab Werk, gegebenenfalls auch Update-fähig, eine Vorprogrammierung auf, welche verschiedene Funktionen in Abhängigkeit von angeschlossenen Stellgliedern verschiedenen Winkelbereichen zuordnet. Auf diese Weise kann die Steuerungseinrichtung in Abhängigkeit der Fähigkeiten des aufgebauten Wassersystems verschiedene Winkelbereiche automatisch verschiedenen Funktionen zuordnen. Zusätzlich kann die Programmierung über ein Bedienmodul nach Wunsch eines Benutzers angepasst werden, wobei die Anpassung in einem Speicher der Steuerungseinrichtung gespeichert werden kann.

Bei typischen Ausführungsformen ist die Steuerungseinrichtung eingerichtet, die Steuerdaten in Abhängigkeit eines begrenzten Winkelbereichs der Hebelbefestigung auszugeben. Falls beispielsweise eine räumliche Begrenzung durch die Montage der Kartusche an einem ungeeigneten Ort vorliegt, ist die Steuerungseinrichtung dazu eingerichtet, nach Programmierung eines maximal möglichen Winkelbereichs der Hebelbefestigung die Ausgabe der Steuerdaten anzupassen. Eine Anpassung kann beispielsweise eine Stauchung des für eine Funktionalität, wie beispielsweise Warm-Kalt, vorgesehenen Winkelbereichs sein. Ein "ungeeigneter Ort" ist beispielsweise dann vorhanden, wenn ein Hebel an einer Kartusche verwendet wird, der Aufgrund einer Wand oder eines Fensters keine vollständige Ansteuerung des ohne eine Begrenzung vorgesehenen Winkelbereichs der Hebelbefestigung zulässt. Die Kartusche selbst muss grundsätzlich keine mechanische Begrenzung haben. Es ist aber bei Ausführungsformen möglich, dass der Drehwinkel der Hebelbefestigung in der Kartusche um die Längsachse der Kartusche in einem Bereich von insgesamt mindestens 210°, mindestens 270°, höchstens 300° oder höchstens 330°, also beispielsweise von -135° bis +135° drehbar ist, wobei ein Bereich von 90° mechanisch ausgeschlossen ist. Typische Ausführungsformen von Kartuschen weisen einen mechanisch ausgeschlossenen Winkelbereich von 90° plus/minus 10° für die Drehung der Hebelbefestigung um die Längsachse auf. In diesem Bereich ist üblicherweise das Becken, so dass der Hebel dort auch physikalisch nicht hingedreht werden kann. Auch verhindert diese mechanische Begrenzung ein Durchdrehen der Kartusche, was ein Zeichen für einen Defekt sein kann. Zudem hat eine solche mechanische Begrenzung auch produktionstechnische Vorteile, da die mechanische Begrenzung gleichzeitig als axiale Stütze dient.

Bei Ausführungsformen kann auch vorgesehen sein, dass die Kartusche über aktive Elemente wie beispielsweise Drehwinkel-Begrenzer für den Winkel der Hebelbefestigung verfügt, welche durch die Steuerungseinrichtung angesteuert werden können. Eine weitere Möglichkeit kann mindestens ein durch die Steuerungseinrichtung angesteuerter Aktuator sein, welcher ein Widerstandsdrehmoment der Hebelbefestigung erzeugen kann, beispielsweise um Rastpunkte zu simulieren oder um ein unbeabsichtigtes Einstellen einer Temperatur über einer bestimmten Schwelle zu erschweren, beispielsweise als Kindersicherung.

Typische Kartuschen können ein Bedienmodul aufweisen, welches dazu eingerichtet ist, in Abhängigkeit des Signals des Wertgebers eine Anzeige auszugeben. Bei Wassersystemen kann vorgesehen sein, dass die Anzeige in Abhängigkeit einer Programmierung der Steuerungseinrichtung ausgegeben wird. Beispielsweise kann integral mit der Kartusche eine optische Funktionsanzeige vorgesehen sein, z.B. ausgeführt als LED-Funktionsanzeige. Die Funktionsanzeige kann dazu eingerichtet sein, je nach programmierter Belegung von Feldern für das Signal des Wertgebers eine Funktion des gerade mit der Hebelbefestigung und dem Positionsgeber angesteuerten Feld anzuzeigen. Bei Ausführungsformen kann die Funktionsanzeige eingerichtet sein, allgemein die bei der aktuellen Position der Hebelbefestigung beeinflusste Funktion anzeigen. Funktionen können beispielsweise die Temperaturvorgabe für das Wasser oder eine Sprudelgradvorgabe für das Wasser sein. Das Bedienmodul kann in einem Gehäuse der Kartusche integriert sein oder als externes, bspw. über Bluetooth angebundenes Gerät, ausgeführt sein. Es können auch eine Mehrzahl von Bedienmodulen, von denen eines in dem Gehäuse der Kartusche integriert sein kann, vorgesehen sein.

Typische Verfahren umfassen ein Ausgeben einer Anzeige auf dem Bedienmodul in Abhängigkeit des Signals des Wertgebers oder der Programmierung der Steuerungseinrichtung. Weiterhin können typische Verfahren ein Empfangen einer Eingabe eines Benutzers, beispielsweise über Bluetooth, das Bedienmodul oder über das Internet, und ein Ändern der Programmierung der Steuereinrichtung in Abhängigkeit der Eingabe umfassen.

Vorteile der Erfindung können sein, dass eine Einbaulage der Kartusche unabhängig von Stellgliedern wie beispielsweise Ventilen sein kann. Kartuschen können verschiedene Funktionen steuern, wobei die Funktionsbelegung einer Kartusche programmierbar sein kann. Kartuschen können sich verschiedenen Stellgliedern zuordnen oder es können an der Steuereinrichtung Vorgaben für maximal ansteuerbare Bereiche beispielsweise für die Temperatur vorgegeben werden. Es kann ermöglicht werden, Benutzerprofile für Kartuschen zu erstellen, wobei die Steuereinrichtung dazu eingerichtet sein kann, diese Benutzerprofile in einem entfernten Speicher abzulegen oder zu spiegeln.

Ein weiterer Vorteil von Ausführungsformen kann eine Updatefähigkeit sein, beispielsweise durch Programmierung der Steuerungseinrichtung mit neuen Funktionen oder durch Erweiterung einer bestehenden Anlage mit weiteren Stellgliedern zur Umsetzung weiterer Funktionen. Typische Steuerungseinrichtung können eingerichtet sein, ein Benutzerverhalten zu ermitteln, beispielsweise Zeitpunkte, Dauer und Art von Benutzungen durch einen Benutzer. Basierend auf einem ermittelten Benutzerverhalten kann vorgesehen sein, automisch Funktionen zu bestimmten Zeitpunkten bereitzustellen, beispielsweise ein Vorzeihen von kochendem Wasser nur zu bestimmten Tageszeiten oder ein automatisches Abschalten einer Ausgabe von Wasser nach einem bestimmten Zeitraum, typischerweise in Abhängigkeit des ausgegebenen Wassers. Ein Beispiel kann das Abschalten der Ausgabe von kochendem Wasser automatisch nach 20 Sekunden, von kaltem Wasser aber erst nach 5 Minuten sein. Die Steuereinrichtung kann eingerichtet sein, um nach einem automatischen Abschalten ein Wiedereinschalten durch einfache Hebelbewegung, insbesondere egal in welche Richtung, zu ermöglichen.

### Kurze Beschreibung der Zeichnungen

Nachfolgend wird die vorliegende Erfindung anhand der beiliegenden Zeichnungen näher erläutert, wobei die Figuren zeigen:
- Fig. 1: ein Ausführungsbeispiel einer Kartusche;
- Fig. 2: die Hebelbefestigung der Kartusche der Fig. 1 mit Drehachsen;
- Fig. 3: ein Ausführungsbeispiel einer Kartusche mit doppeltem Wertgeber;
- Fig. 4: ein Ausführungsbeispiel einer Kartusche mit Dichtungen;
- Fig. 5: ein Ausführungsbeispiel eines ersten Wertgebers als Potentiometer;
- Fig. 6: ein Ausführungsbeispiel eines ersten Wertgebers mit unterbrochener Widerstandsbahn;
- Fig. 7: ein Ausführungsbeispiel eines ersten Wertgebers mit über Widerstände verbundene Unterbrechungen der Widerstandsbahn;
- Fig. 8: ein Ausführungsbeispiel eines zweiten Wertgebers als Potentiometer;
- Fig. 9: ein Ausführungsbeispiel einer Kartusche mit einem Kommunikationsmodul und einer Energiequelle;
- Fig. 10: ein Ausführungsbeispiel einer Kartusche mit einem elektronischen Wertgeber; und
- Fig. 11: zeigt ein Wassersystem zur Abgabe von konditionierbarem Wasser mit einer Kartusche in einer beispielhaften Ausführungsform.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

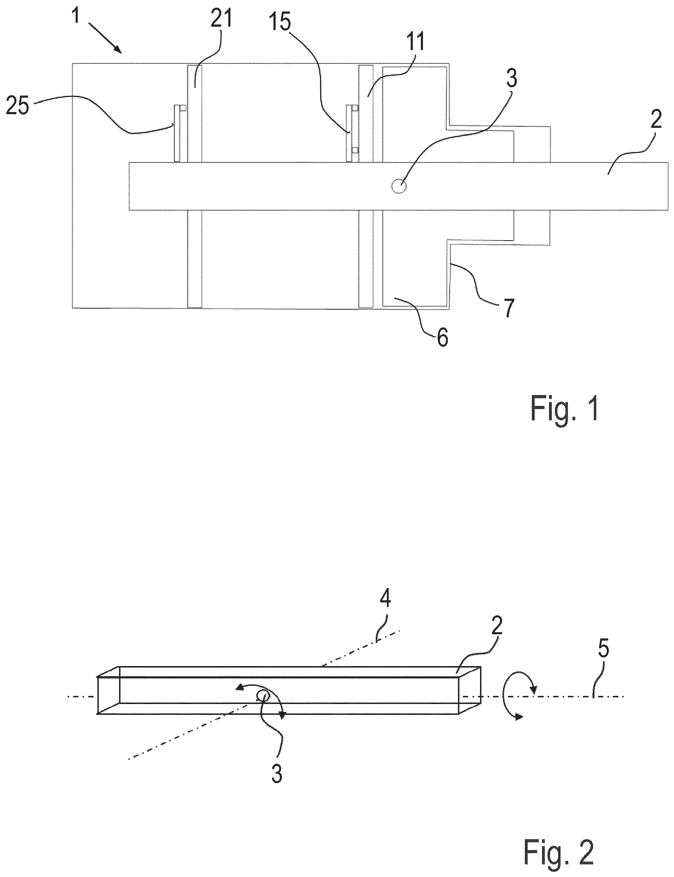

Fig. 1 zeigt ein Ausführungsbeispiel einer Kartusche 1. Eine Hebelbefestigung 2, an der ein nicht dargestellter Hebel einer Einhebelarmatur befestigbar ist, ist über ein Lager 3 in einem Lagerring 6 gelagert. Bei Drehung der Hebelbefestigung 2 wird das Lager 3 orthogonal zu seiner Wirkrichtung betrieben, so dass der Lagerring 6 in einem Gehäuse 7 der Kartusche 1 gedreht wird. Mit der Hebelbefestigung 2 sind ein erster Positionsgeber 15 und ein zweiter Positionsgeber 25 mechanisch fixiert verbunden. Ein erster Wertgeber 11 und ein zweiter Wertgeber 21 sind jeweils mechanisch fixiert mit dem Gehäuse 7 verbunden.

Bei typischen Ausführungsformen mit zwei Wertgebern ist der zweite Wertgeber typischerweise so aufgebaut, dass der generierte Wert von der Position der Hebelbefestigung in Rotationsrichtung unabhängig ist und ausserdem von der Position der Hebelbefestigung in Kipprichtung abhängig ist. Auf diese Weise lassen sich die beiden Werte unabhängig voneinander erfassen.

Fig. 2 zeigt die Hebelbefestigung 2 mit dem Lager 3 in einer Detailansicht, wobei eine Kippachse 4 und eine Längsachse 5 der Hebelbefestigung eingezeichnet sind. Die eingezeichneten Pfeile verdeutlichen eine Rotationsbewegung der Hebelbefestigung 2 um die Längsachse 5, wenn der nicht dargestellte Hebel einer Einhebelarmatur gedreht wird, und eine Kippbewegung der Hebelbefestigung 2 am Lager 3 um die Kippachse 4, wenn der nicht dargestellte Hebel einer Einhebelarmatur angehoben oder abgesenkt wird. Die Längsachse 5 entspricht dabei typischerweise auch der Längsachse der Kartusche 1.

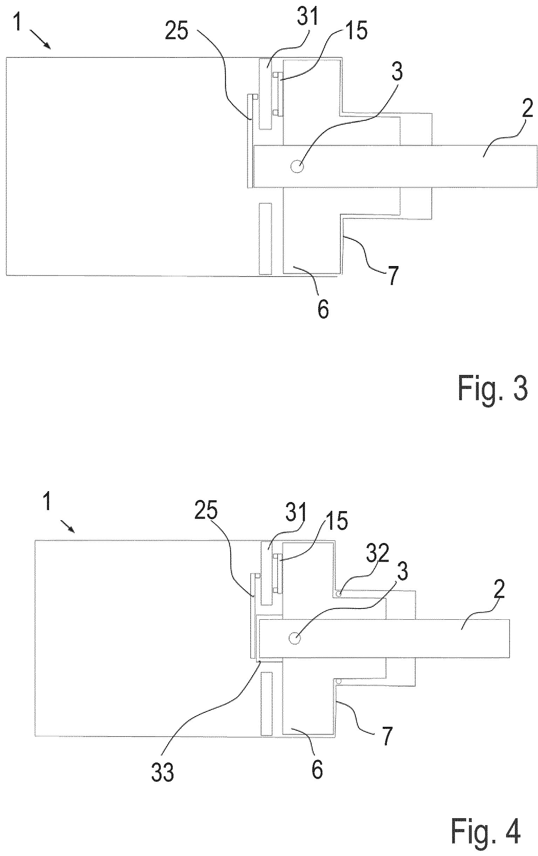

Fig. 3 zeigt ein weiteres Ausführungsbeispiel einer Kartusche 1 mit einem doppelten Wertgeber 31. Der doppelte Wertgeber 31 wird auf der dem Lagerring 6 zugewandten Seite von einem ersten Positionsgeber 15 kontaktiert, der mit dem Lagerring 6 verbunden ist. Auf der in axialer Richtung der Hebelbefestigung 2 gegenüberliegenden Seite wird der doppelte Wertgeber 31 von einem zweiten Positionsgeber 25 kontaktiert.

Fig. 4 zeigt ein weiteres Ausführungsbeispiel einer Kartusche 1 mit einem doppelten Wertgeber 31, einer Ringdichtung 32, die zwischen dem Gehäuse 7 und dem Lagerring 6 das Eindringen von Fremdkörpern verhindert. Analog zu dem Ausführungsbeispiel der Fig. 3 ist ein erster Positionsgeber 15 vorgesehen. Weiterhin umfasst die Kartusche 1 des Ausführungsbeispiels der Fig. 4 eine Stulpdichtung 33, die zwischen dem Lagerring 6 und der Hebelbefestigung 2 abdichtet. Ein zweiter Positionsgeber 25 ist mit der Stulpdichtung 33 verbunden und kontaktiert den doppelten Wertgeber 31.

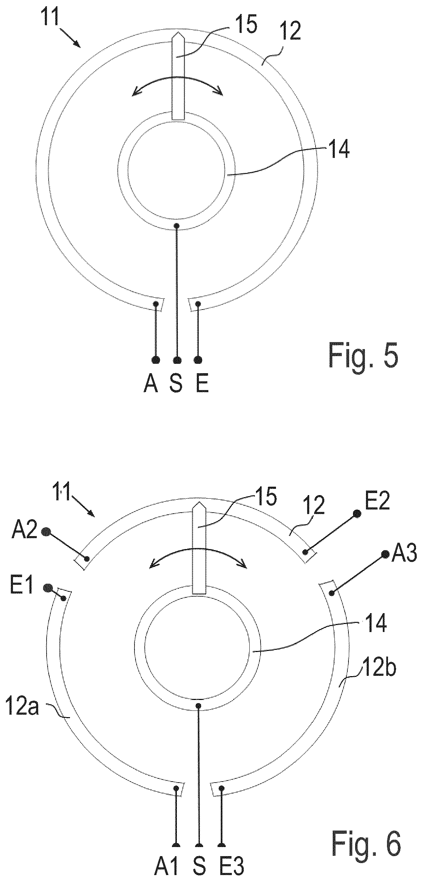

Fig. 5 zeigt ein Ausführungsbeispiel eines ersten Wertgebers 11 in Form eines Potentiometers, wobei die Widerstandsbahn 12 auf der einen Seite mit dem Anschluss A und auf der anderen Seite mit dem Anschluss E verbunden ist. Der Kontaktring 14 ist mit dem Anschluss S verbunden. Der erste Positionsgeber 15, der in polare Richtung bewegt wird, verbindet den Kontaktring 14 mit der Widerstandsbahn 12.

Fig. 6 zeigt ein Ausführungsbeispiel eines ersten Wertgebers 11 in Form eines Potentiometers mit unterbrochener Widerstandsbahn 12, die in Teilbereiche 12, 12a und 12b unterbrochen ist. Jeweils eine Seite jeder Widerstandsbahn 12 ist mit einem Anschluss A und einem Anschluss E verbunden. Der Kontaktring 14 ist mit dem Anschluss S verbunden. Der erste Positionsgeber 15, der in polare Richtung bewegt wird, verbindet den Kontaktring 14 mit jeweils einer der Widerstandsbahnen 12, 12a oder 12b.

Ausführungsformen mit unterbrochener Widerstandsbahn können ein Einstellen der Art des auszugebenden Mediums erlauben, beispielsweise ob ein Wasser mit Sprudel oder ohne ausgegeben werden soll.

Um beispielsweise eine bekannte Bedienweise von herkömmlichen Wassersystem beizubehalten, kann das Ausführungsbeispiel der Fig. 6 verwendet werden. Kalt-Warm kann auf Basis der Widerstände zwischen S und A2 / S und E2, also mit der Widerstandsbahn 12, angewählt werden. Gekühltes Wasser kann auf der Widerstandsbahn 12b zwischen S und A3, S und E3 angewählt werden. Bei dieser Stellung würde die Hebelbefestigung weiter als das Kalt-Ende der Warm-Kalt Widerstandsbahn 12 bewegt werden. Kochendes Wasser könnte auf der Widerstandsbahn 12a zwischen S und A1, S und E1 angewählt werden, da analog die Hebelbefestigung noch weiter in Richtung Warm über das Warm-Ende der Widerstandsbahn 12 gedreht wird.

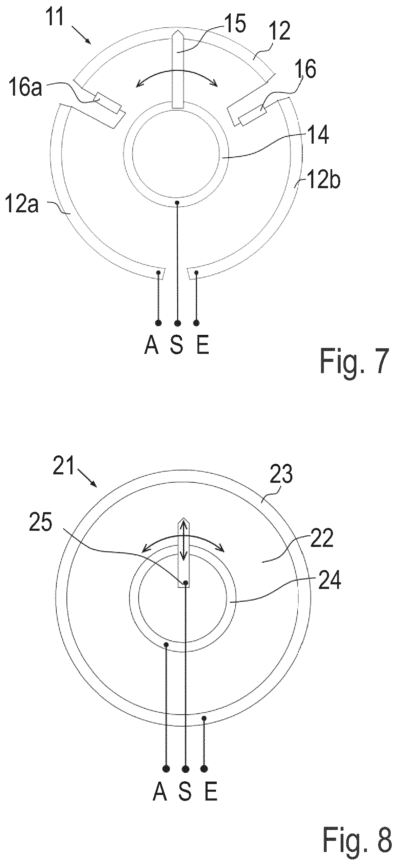

Fig. 7 zeigt ein Ausführungsbeispiel eines ersten Wertgebers 11 in Form eines Potentiometers mit über Widerstände 16 verbundenen Unterbrechungen in der Widerstandsbahn 12, die in Teilbereiche 12, 12a und 12b eingeteilt ist. Die Widerstände 16, 16a verbinden die Teilbereiche 12, 12a und 12b so, dass zwischen dem Anschluss A und dem Anschluss E ein Gesamtwiderstand vorhanden ist. Der Kontaktring 14 ist mit dem Anschluss S verbunden. Der erste Positionsgeber 15, der in polare Richtung bewegt wird, verbindet den Kontaktring 14 mit jeweils einer der Widerstandsbahnen 12, 12a, 12b oder ist im Bereich der Unterbrechung, so dass kein Kontakt hergestellt wird.

Fig. 8 zeigt ein Ausführungsbeispiel eines zweiten Wertgebers 21 in Form eines Potentiometers. Der Anschluss A ist mit dem inneren Kontaktring 24 verbunden. Der Anschluss E ist mit dem äusseren Kontaktring 23 verbunden. Zwischen dem inneren Kontaktring 24 und dem äusseren Kontaktring 23 ist eine Widerstandsschicht 22 flächig vorhanden. Der Anschluss S ist mit einem zweiten Positionsgeber 25, der sowohl in polare als auch in radiale Richtung bewegt werden kann, verbunden.

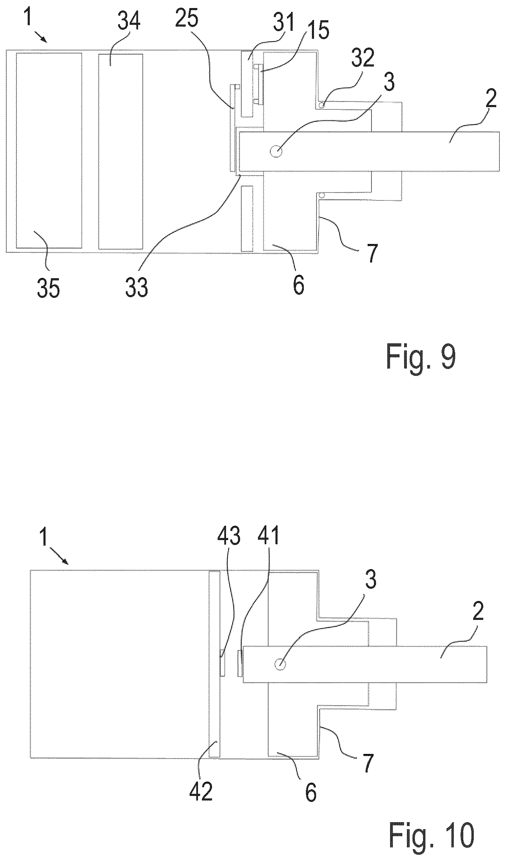

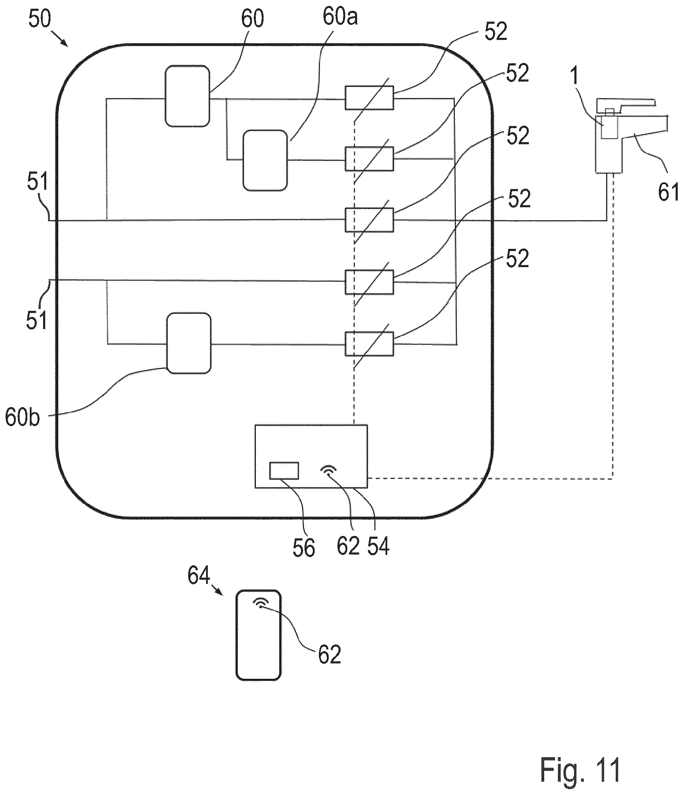

Fig. 9 zeigt ein Ausführungsbeispiel einer Kartusche 1 mit einem Kommunikationsmodul 34 und einer Energieversorgungseinrichtung 35. Das Kommunikationsmodul 34 ist mittels Kabel mit dem doppelten Wertgeber 31 verbunden. Das Kommunikationsmodul 34 ist dazu eingerichtet, Signale des doppelten Wertgebers 31 an eine Steuerungseinrichtung (siehe Fig. 11) drahtlos zu übertragen. Die Energieversorgungseinrichtung 35 ist bei dem Ausführungsbeispiel der Fig. 9 als Batterie ausgebildet. Die Energieversorgungseinrichtung 35 versorgt das Kommunikationsmodul 34 mit elektrischer Energie.

Fig. 10 zeigt ein Ausführungsbeispiel einer Kartusche 1, bei der ein Positionsgeber 41 durch einen Permanentmagneten gebildet wird oder diesen umfasst. Der Permanentmagnet ist mit der Hebelbefestigung 2 fixiert verbunden, so dass der Permanentmagnet den Bewegungen der Hebelbefestigung 2 folgt.

Weiterhin ist bei dem Ausführungsbeispiel der Fig. 10 ein elektronisch ausgeführter Wertgeber 42 vorgesehen, der einen mehrachsigen Hallsensor 43 umfasst. Der Begriff mehrachsiger Hallsensor 43 bezeichnet dabei typischerweise eine Kombination mehrerer linearer Hallsensoren. Der Hallsensor 43 ist ortsfest mit dem Gehäuse 7 der Kartusche 1 verbunden. Der Hallsensor 43 nimmt die Bewegungen des Permanentmagneten in einem kartesischen Koordinatensystem x, y, z auf.

Eine Transformation von dem x, y, z System in das alpha, phi System kann bei Ausführungsformen in dem Wertgeber oder in einer anderen Einrichtung im Datenstrom abwärts des Wertgebers, beispielsweise im Kommunikationsmodul oder in der Steuerungseinrichtung vorgenommen werden. Eine weitere Möglichkeit ist, dass die Steuerungseinrichtung die Signale im x, y, z System unmittelbar verarbeiten kann, beispielsweise indem sie entsprechend programmiert ist.

Fig. 11 zeigt ein Wassersystem 50 zur Abgabe von konditionierbarem Wasser mit einer Kartusche 1 in der im Zusammenhang mit der Fig. 10 erläuterten Ausführungsform, ergänzt um die im Zusammenhang mit der Fig. 9 erläuterten Module Kommunikationsmodul und Energieversorgungseinrichtung.

Das Wassersystem 50 weist Anschlüsse 51 für Warmwasser und Kaltwasser auf. Weiterhin umfasst das Wassersystem Stellglieder 52 zum Steuern der Bereitstellung von Wasser und eine Steuerungseinrichtung 54 zum Kontrollieren der Stellglieder 52. Die Steuerungseinrichtung 54 ist dazu eingerichtet, von dem Kommunikationsmodul das Signal des Wertgebers zu empfangen und in Abhängigkeit dieses Signals Steuerdaten betreffend die Temperatur, den Volumenstrom und, falls gewünscht, den Sprudelgrad des abzugebenden Wassers zu erzeugen. Die Stellglieder 52 umfassen verschiedene Ventile, um beispielsweise den Durchfluss von kochendem Wasser aus dem Behälter 60b, gekühltem Wasser aus dem Behälter 60, mit CO₂ versetztes Wasser aus dem Behälter 60a, Kaltwasser und Warmwasser durch eine Ausgabevorrichtung 61 zu kontrollieren.

Die Steuerungseinrichtung 54 umfasst einen Speicher 56 und ist ausserdem über eine kabellose oder kabelbehaftete Datenverbindung, insbesondere eine Bluetooth oder WLAN-Verbindung, an ein Datennetz 62 angeschlossen, so dass die Steuerungseinrichtung 54 programmierbar ist. Kabelgebunden oder mit Bluetooth kann eine Datenverbindung für die Signale von der Kartusche zu der Steuerungseinrichtung 54, und ggf. auch in umgekehrter Richtung, aufgebaut sein.

Bei Ausführungsformen der Kartusche mit Hallsensor können beispielsweise verschiedene Felder oder Wertebereiche für die Signale des Hallsensors in der Steuerungseinrichtung 54 hinterlegt bzw. programmiert werden, um eine Abgabe verschiedener Arten von Wasser zu ermöglichen.

Weiterhin umfasst die Kartusche 1 bei dem Ausführungsbeispiel der Fig. 11 ein Bedienmodul 64, welches dazu eingerichtet ist, in Abhängigkeit des Signals des Wertgebers und in Abhängigkeit einer Programmierung der Steuerungseinrichtung optisch eine Rückmeldung an einen Bediener auszugeben. Das Bedienmodul 64 umfasst hierzu eine mit LED-Leuchtmittel ausgestattete Funktionsanzeige, welche beispielsweise die durch die Kartusche eingestellte Temperaturvorgabe oder Sprudelgradvorgabe für das Wasser anzeigen kann.

Die Erfindung ist nicht auf zuvor beschriebenen Ausführungsformen beschränkt, vielmehr wird der Umfang der Erfindung durch die beigefügten Ansprüche bestimmt.

### Bezugszeichenliste

1 Kartusche
2 Hebelbefestigung
3 Lager
4 Kippachse
5 Längsachse
6 Lagerring
7 Gehäuse
11 erster Wertgeber
12 Widerstandsbahn
14 Kontaktring
15 erster Positionsgeber
16 Widerstand
21 zweiter Wertgeber
22 Widerstandsschicht
23 äusserer Kontaktring
24 innerer Kontaktring
25 zweiter Positionsgeber
31 doppelter Wertgeber
32 Ringdichtung
33 Stulpdichtung
34 Kommunikationsmodul
35 Energieversorgungseinrichtung
41 Wertgeber (Permanentmagnet)
42 elektronischer Wertgeber
43 mehrachsiger Hall-Sensor
50 Wassersystem
51 Anschlüsse für Warmwasser und für Kaltwasser
52 Stellglieder
54 Steuerungseinrichtung
56 Speicher
60 Behälter, gekühltes Wasser
60a Behälter, mit CO₂ versetztes Wasser
60b Behälter, kochendes Wasser
61 Ausgabevorrichtung
62 Datennetz
64 Bedienmodul
A elektrischer Anschluss mit Bezeichnung A
S elektrischer Anschluss mit Bezeichnung S
E elektrischer Anschluss mit Bezeichnung E

## Patentansprüche

1. Kartusche (1) zur Generierung von Steuersignalen für ein Wassermischsystem, umfassend:
- ein Gehäuse (7),
- eine relativ zu dem Gehäuse (7) bewegliche Hebelbefestigung (2) zur Aufnahme eines Hebels, und
- eine Gebereinrichtung zur Erzeugung eines Signals in Abhängigkeit der Position der Hebelbefestigung (2);
wobei die Gebereinrichtung einen Positionsgeber (15, 25, 41) und einen Wertgeber (11, 21, 31, 42) umfasst;
wobei der Wertgeber dazu eingerichtet ist das Signal zu erzeugen;
**dadurch gekennzeichnet, dass**
der Positionsgeber (15, 25, 41) mit der Hebelbefestigung (2) gekoppelt ist und wobei der Positionsgeber (15, 25, 41) mit dem Wertgeber (11, 21, 31, 42), welcher ortsfest bezüglich des Gehäuses (7) montiert ist, zusammenwirkt.

2. Kartusche (1) nach Anspruch 1, wobei der Positionsgeber (41) einen Permanentmagneten umfasst und wobei der der Wertgeber (42) einen Hallsensor (43), umfasst.

3. Kartusche (1) nach Anspruch 1, wobei der Wertgeber (11, 21, 31) ein Potentiometer umfasst.

4. Kartusche (1) nach Anspruch 3, wobei eine ringförmige Widerstandsbahn des Potentiometers zumindest einmal unterbrochen ist, so dass der Positionsgeber in Abhängigkeit von einer polaren Stellung der Hebelbefestigung eine erste oder eine zweite Widerstandsbahn mit dem Kontaktring verbindet.

5. Kartusche (1) nach einem der vorhergehenden Ansprüche, mit einem Kommunikationsmodul (34) und/oder einer Energieversorgungseinrichtung (35).

6. Wassersystem (50) zur Abgabe von Wasser, insbesondere konditionierbares Wassersystem, mit einer Kartusche (1) nach einem der vorhergehenden Ansprüche, mindestens einem Stellglied (52) zum Steuern der Bereitstellung von Wasser und einer Steuerungseinrichtung (54) zum Kontrollieren des mindestens einen Stellglieds (52).

7. Wassersystem (50) nach Anspruch 6, wobei die Steuerungseinrichtung (54) dazu eingerichtet ist, in Abhängigkeit von dem Signal des Wertgebers (11, 21, 31, 42) Steuerdaten betreffend eine Temperatur, einen Volumenstrom und/oder einen Sprudelgrad eines abzugebenden Wassers und/oder eine Gesamtmenge eines in einem Abgabevorgang abzugebenden Wassers zu erzeugen.

8. Wassersystem nach Anspruch 6 oder 7, wobei die Steuerungseinrichtung (54) entfernt von der Kartusche (1) angeordnet ist.

9. Wassersystem (50) nach einem der Ansprüche 7 und 8, wobei die Steuerungseinrichtung (54) programmierbar ist, so dass die Steuerungseinrichtung (54) dazu eingerichtet ist, die Steuerdaten auch in Abhängigkeit einer Programmierung der Steuerungseinrichtung (54) zu erzeugen.

10. Wassersystem (50) nach einem der Ansprüche 6 bis 9, mit einem Bedienmodul (64), welches dazu eingerichtet ist, in Abhängigkeit des Signals des Wertgebers (11, 21, 31, 42) und/oder der Programmierung der Steuerungseinrichtung (54) eine Anzeige auszugeben.

11. Verfahren zum Steuern eines Wassersystems (50) nach einem der Ansprüche 6 bis 10, umfassend:
- Ermitteln einer Stellung der Hebelbefestigung (2) und Erzeugen eines der Stellung entsprechenden Signals durch den Wertgeber (11, 21, 31, 42),
- Übermitteln des Signals an die Steuereinrichtung (54); und
- Ansteuern des zumindest eines Stellglieds (52) durch die Steuereinrichtung (54) in Abhängigkeit von dem Signal.

12. Verfahren nach dem Anspruch 11, umfassend:
- Ausgeben einer Anzeige auf dem Bedienmodul (64) in Abhängigkeit des Signals des Wertgebers (11, 21, 31, 42) und/oder der Programmierung der Steuerungseinrichtung (54).

13. Verfahren nach dem Anspruch 11 oder 12, umfassend:
- Empfangen einer Eingabe eines Benutzers; und
- Ändern der Programmierung der Steuereinrichtung in Abhängigkeit der Eingabe.

## Claims

1. Cartridge (1) for the generation of control signals for a water mixing system, comprising:
- a housing (7),
- a lever attachment (2), which is moveable relative to the housing (7), for the accommodation of a lever, and
- a detector device for the generation of a signal, according to the position of the lever attachment (2);
wherein the detector device comprises a locator (15, 25, 41) and a valuator (11, 21, 31, 42);
**characterized in that**
the locator (15, 25, 41) is coupled to the lever attachment (2), and wherein the locator (15, 25, 41) cooperates with the valuator (11, 21, 31, 42), which is fitted in a fixed arrangement relative to the housing (7).

2. Cartridge (1) according to Claims 1, wherein the locator (41) comprises a permanent magnet, and wherein the valuator (42) comprises a Hall effect sensor (43).

3. Cartridge (1) according to Claim 1, wherein the valuator (11, 21, 31) comprises a potentiometer.

4. Cartridge (1) according to Claim 3, wherein an annular resistance path of the potentiometer is interrupted at least once, such that the locator, depending upon a polar position of the lever attachment, connects a first or a second resistance path with the contact ring.

5. Cartridge (1) according to one of the preceding claims, having a communications module (34) and/or an energy supply apparatus (35).

6. Water system (50) for the output of water, particularly a conditionable water system, having a cartridge (1) according to one of the preceding claims, at least one actuator (52) for controlling the delivery of water, and a control device (54) for controlling the at least one actuator (52).

7. Water system (50) according to Claim 6, wherein the control device (54) is designed, according to the signal from the valuator (11, 21, 31, 42), to generate control data with respect to a temperature, a volume flow and/or a degree of effervescence of water which is to be delivered, and/or an overall quantity of water which is to be delivered in a delivery process.

8. Water system according to Claim 6 or 7, wherein the control device (54) is arranged remotely from the cartridge (1).

9. Water system (50) according to one of Claims 7 or 8, wherein the control device (54) is programmable, such that the control device (54) is also designed to generate control data in accordance with the programming of the control device (54).

10. Water system (50) according to one of Claims 6 to 9, having an operator module (64) which is designed, according to the signal from the valuator (11, 21, 31, 42) and/or the programming of the control device (54), to generate a display output.

11. Method for controlling a water system (50) according to one of Claims 6 to 10, comprising:
- Determination of the setting of the lever attachment (2) and generation of a signal by the valuator (11, 21, 31, 42) which corresponds to the setting;
- Transmission of the signal to the control device (54); and
- Actuation of the at least one actuator (52) by the control device (54), according to the signal.

12. Method according to Claim 11, comprising:
- Output of a display on the operator module (64), according to the signal from the valuator (11, 21, 31, 42) and/or the programming of the control device (54).

13. Method according to Claim 11 or 12, comprising:
- Reception of an input from an operator; and
- Adjustment of the programming of the control device, according to the input.

## Revendications

1. Cartouche (1) pour la génération de signaux de commande d'un système de mélange d'eau, comprenant :
- un boîtier (7),
- une fixation de levier (2) mobile par rapport au boîtier (7) et destiné à recevoir un levier, et
- un dispositif émetteur pour générer un signal en fonction de la position de la fixation de levier (2) ;
dans laquelle
le dispositif émetteur comprend un capteur de position (15, 25, 41) et un encodeur (11, 21, 31, 42) ;
l'encodeur est conçu pour générer le signal ;
**caractérisée en ce que**
le capteur de position (15, 25, 41) est couplé à la fixation de levier (2), et
le capteur de position (15, 25, 41) interagit avec l'encodeur (11, 21, 31, 42) monté fixe par rapport au boîtier (7).

2. Cartouche (1) selon la revendication 1,
dans laquelle le capteur de position (41) comprend un aimant permanent et l'encodeur (42) comprend un capteur à effet Hall (43).

3. Cartouche (1) selon la revendication 1,
dans laquelle l'encodeur (11, 21, 31) comprend un potentiomètre.

4. Cartouche (1) selon la revendication 3,
dans laquelle une piste de résistance annulaire du potentiomètre est interrompue au moins une fois, de sorte que le capteur de position relie une première ou une deuxième piste de résistance à la bague de contact, en fonction d'une position polaire de la fixation de levier.

5. Cartouche (1) selon l'une des revendications précédentes,
comprenant un module de communication (34) et/ou un dispositif d'alimentation en énergie (35).

6. Système d'eau (50) pour la distribution d'eau, en particulier système d'eau susceptible d'être conditionné, comprenant une cartouche (1) selon l'une des revendications précédentes, au moins un actionneur (52) pour commander la fourniture d'eau, et un dispositif de commande (54) pour contrôler ledit au moins un actionneur (52).

7. Système d'eau (50) selon la revendication 6,
dans lequel le dispositif de commande (54) est conçu pour, en fonction du signal provenant de l'encodeur (11, 21, 31, 42), générer des données de commande relatives à la température, au débit volumique et/ou au degré de pétillement de l'eau à distribuer et/ou à la quantité totale d'eau à distribuer lors d'un processus de distribution.

8. Système d'eau selon la revendication 6 ou 7,
dans lequel le dispositif de commande (54) est disposé à distance de la cartouche (1).

9. Système d'eau (50) selon l'une des revendications 7 et 8,
dans lequel le dispositif de commande (54) est programmable, de sorte que le dispositif de commande (54) est conçu pour générer les données de commande également en fonction d'une programmation du dispositif de commande (54).

10. Système d'eau (50) selon l'une des revendications 6 à 9,
comprenant un module de manœuvre (64) conçu pour émettre une indication en fonction du signal provenant de l'encodeur (11, 21, 31, 42) et/ou de la programmation du dispositif de commande (54).

11. Procédé de commande d'un système d'eau (50) selon l'une des revendications 6 à 10, consistant à:
- déterminer une position de la fixation de levier (2) et générer, au moyen de l'encodeur (11, 21, 31, 42), un signal correspondant à ladite position ;
- transmettre le signal au dispositif de commande (54) ; et
- commander ledit au moins un actionneur (52) en fonction du signal au moyen du dispositif de commande (54).

12. Procédé selon la revendication 11, consistant à :
- émettre une indication sur le module de manœuvre (64) en fonction du signal provenant de l'encodeur (11, 21, 31, 42) et/ou de la programmation du dispositif de commande (54).

13. Procédé selon la revendication 11 ou 12, consistant à :
- recevoir une saisie d'un utilisateur ; et
- modifier la programmation du dispositif de commande en fonction de la saisie.
